# EUROPEAN PATENT APPLICATION

(11) **EP 1 331 584 A1**
(43) Date of publication of application: **30.07.2003**
(21) Application number: 01974732.8
(22) Date of filing: 05.10.2001
(51) Int. Cl.: G06F 17/60

(54) **NONLIFE INSURANCE SYSTEM**

(30) Priority: 06.10.2000 JP 2000308246
(71) Applicant: TSUBASA SYSTEM CO. LTD., Tokyo 136-0071 (JP)
(72) Inventor: NAGATA, Toshitsugu C/O TSUBASA SYSTEM CO., LTD., Koutou-ku Tokyo 136-0071 (JP)
(74) Representative: Chettle, Adrian John
(86) International application number: JP0108827
(87) International publication number: WO02031722

(57) **Abstract**

A nonlife insurance system for nonlife insurance plan to provide an incentive to re-use of a recycled part, wherein the repair cost of an insured object is calculated on a new part basis and, when the owner of the insured object selects to repair the object with a used part, a difference of disbursement is reimbursed to the owner by cash or as service points at a specified rate, for example, assuming that a vehicle (3) is damaged and an owner (2) request the repair to a repair shop (4) , when the repair shop inputs estimated amounts for both cases into a terminal (40) based on the obtained information on part price, an insurance company calculates the amount to be reimbursed by the terminal (10) and presents the options to the owner.

## Description

### Technical Field

The present invention relates to a nonlife insurance system and, for example, a vehicle insurance with a special agreement for using recycled parts.

### Background Art

Conventionally, in the case in which insurance is applied to perform repairing, it is a common practice to use new parts.

However, in recent years, due to increase in consciousness concerning environmental problems on the earth, arrangement of an environment for supplying recycled parts, and the like, it has been desired to utilize the recycled parts also in repairs at the time when an insurance is applied.

Then, vehicle insurance with a special agreement for using recycled parts, which is premised on utilization of such recycled parts, is also provided.

This vehicle insurance with a special agreement for using recycled parts adopts recycled parts actively in repairs and allots an amount of difference between the case in which recycled parts are used and the case in which new parts are used to a discount of insurance premium, thereby discounting the insurance premium by, for example, 5% to return the discounted premium to a policyholder of the insurance.

However, in the above-mentioned vehicle insurance with a special agreement for using recycled parts, since the premium is not returned based upon an amount of difference actually generated but is returned to policyholders uniformly anticipating a fixed amount of difference in advance, it is necessary to limit vehicles to be insured to those for which the fixed amount of difference can be anticipated.

For example, vehicles to be insured are "limited to main five types of cars manufactured in Japan for which four years or more have passed since new car registration" with a high supply ratio of recycled parts.

In addition, since this returned amount is calculated somewhat lower than usual such that the returned amount does not exceed an actual amount of difference to collapse the insurance, advantages for the policyholder are little.

Moreover, since the returned amount to the policyholder is the same whether recycled parts are used or new parts are used upon the actual repairs and the policyholder desires repairs with new parts as much as possible, this prevents facilitation of use of recycled parts.

Thus, it is an object of the present invention to provide a nonlife insurance system, a terminal used for the nonlife insurance system, and a refund calculation method which are capable of appropriately distributing an amount of difference in the case in which recycled parts are used to repair an insured object and realizing facilitation of use of recycled parts, increase of policyholders, or reduction of payment of premiums.

### Disclosure of the Invention

In order to solve the above-mentioned problems, according to a nonlife insurance system, a terminal used for the nonlife insurance system, and a refund calculation method of the present invention, the case in which an insured object is repaired using new parts is compared with the case in which the insured object is repaired using recycled parts to find an amount of difference and calculates a predetermined ratio of this amount of difference as a refund amount, whereby reduction of an amount of premium payment of a policyholder and increase of policyholders can be realized while distributing this amount of difference so as to be optimal for both an insurance company and an owner of the insured object and controlling payment of the insurance company.

In addition, an advantage in the case in which recycled parts are used can be clearly shown, and use of recycled parts is facilitated.

### Brief Description of the Drawings

Fig. 1 is a block diagram explaining a first embodiment in accordance with the present invention.
Fig. 2 is an explanatory view of a used car distribution system.
Fig. 3 is an explanatory view of a calculation and payment method of a refund of the present invention.
Fig. 4 is a block diagram explaining a second embodiment in accordance with the present invention.
Fig. 5 is a block diagram explaining a third embodiment in accordance with the present invention.

### Best Mode for carrying out the Invention

Embodiments of the present invention will be hereinafter described in conjunction with illustrated examples.

### First embodiment

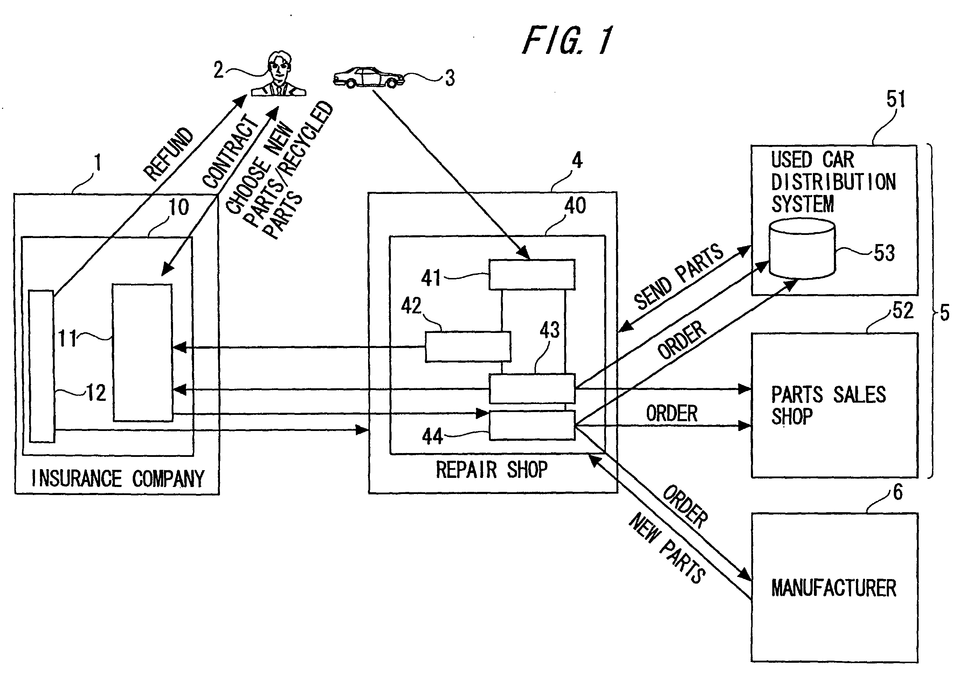

Fig. 1 is a block diagram showing an entire nonlife insurance system.

An insurance company 1 conducts insurance business based upon a contract with a policyholder 2, and in this embodiment, in repairing a vehicle 3 which is an insured object, the insurance company 1 has entered into a contract of vehicle insurance with a special agreement for returning a part of a premium to the policyholder in the case in which recycled parts are used.

An insurance company terminal 10 provided in the above-mentioned insurance company 1 includes: calculation unit 11 which calculates a predetermined amount from an amount of difference between an amount in the case in which repairing is performed with new parts and an amount in the case in which repairing is performed with recycled parts as a refund; and payment unit 12 which pays the refund calculated by the calculation unit 11 to an insured.

A repair shop terminal 40 provided in a repair shop 4 includes: parts data input unit 41 which inputs data of parts required for repairing of the vehicle 3; new parts use amount input unit 42 which inputs an amount in the case in which repairing is performed with new parts to the insurance company terminal 10; recycled parts use amount input unit 43 which inputs an amount in the case in which repairing is performed with recycled parts to the insurance company terminal 10; and order unit 44 which orders recycled parts in the case in which it is chosen to perform repairing using the recycled parts.

Note that the recycled parts in the present invention refer mainly to used parts (reusable parts, which are subjected to inspection, cleaning, and the like) and rebuilt parts (parts which are obtained by repairing and repainting used parts to have the same quality as new parts) but are not strictly limited to these, and new parts sold as used and low-prices parts may be used as long as the parts have a price difference with new parts used in an insured object as the standards.

As a provider 5 of the recycled parts, there are a used car distribution system 51, a parts sales shop 52, and the like.

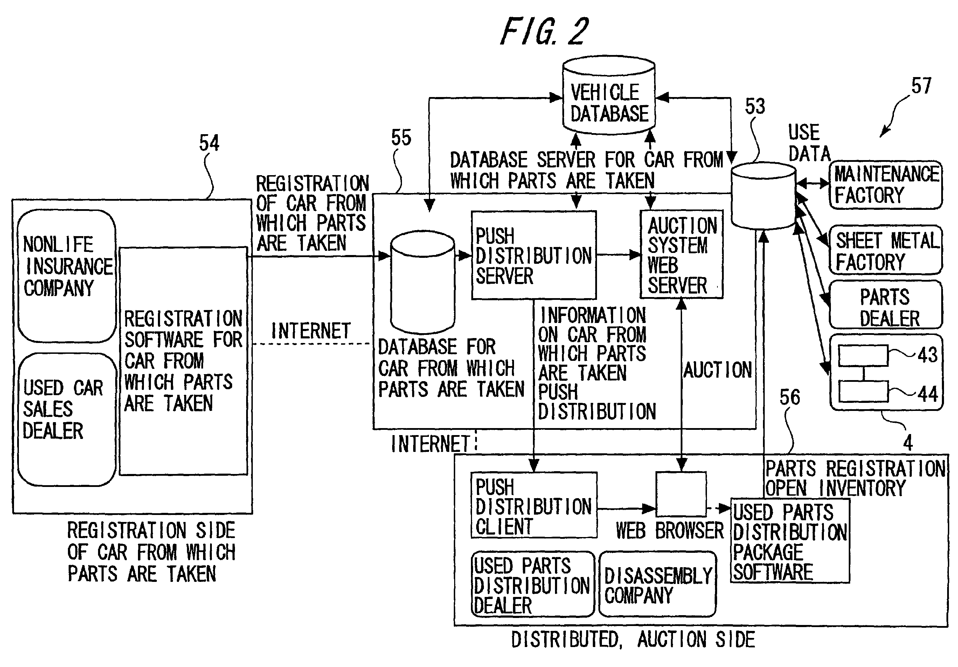

In the used car distribution system 51, as shown in Fig. 2, a registered person 54 for a car from which parts are to be taken, registers a car from which parts are to be taken to sell it in a main server 55, and a demolition dealer 56 purchases the car from which parts are to be taken based upon information on this registration. Then, the demolition dealer 56 demolishes the car from which parts are to be taken and registers data of used parts, which can be sold in recycle data storage unit 53, and provides the data to a used parts user 57.

In this recycle data storage unit 53, a type of used car, a model year, a color, a part number, a grade, a price, a date on which parts can be delivered, volume of inventories, and the like of used parts are stored.

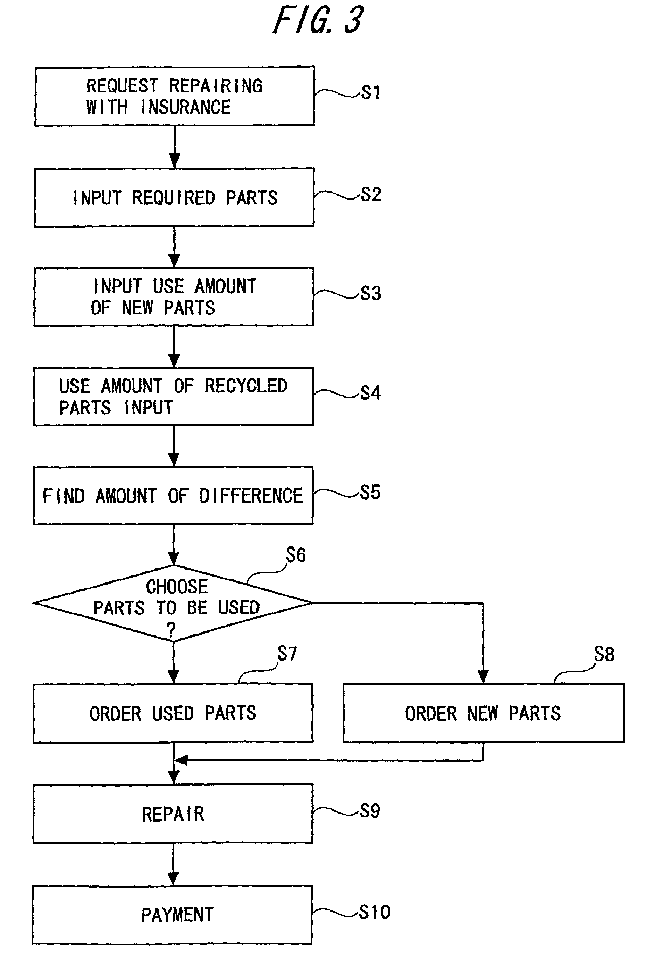

Fig. 3 is an explanatory view of a method of calculating the above-mentioned refund and paying it to the insured in this system.

In the case in which the vehicle 3 is damaged and repaired by applying insurance, the policyholder (owner of the insured object) 2 communicates to that effect to the insurance company 1 and, at the same time, requests the repair shop 4 to repair the vehicle (step 1, hereinafter abbreviated as S1).

The repair shop 4 lists parts required for repairing, and inputs the parts from the parts data input unit 41 (S2).

The repair shop 4 estimates an amount in the case in which new parts are collected for repairing as all the inputted parts, and inputs the amount to the calculation unit 11 of the insurance company terminal 10 with the new parts use amount input unit 42 (S3) .

At this point, repair expenses are estimated including transportation charges, attachment expenses, processing expenses, courtesy car expenses, and the like other than prices of the parts.

The repair shop 4 may input the expenses while looking at a price list or the like, but may be provided with a database having stored therein prices, transportation charges, attachment expenses, and processing expenses corresponding to parts in advance and refer to the database based upon the parts inputted by the parts data input unit 41 to calculate the expenses.

Similarly, the repair shop 4 refers to the recycle data storage unit 53 concerning the parts inputted from the parts data input unit 41 by the recycled parts use amount input unit 43, estimates an amount in the case in which the vehicle 3 is repaired using recycled parts which can be ordered, and inputs the amount to the calculation unit 11 of the insurance company terminal 10 (S4).

Repair expenses in this case are also estimated including transportation charges, attachment expenses, processing expenses, courtesy car expenses, and the like other than prices of the parts.

In addition, the provider 5 of recycled parts is not limited to one, and information on rebuilt parts and new parts sold as used are obtained from the parts sales shop 52 in this embodiment.

The insurance company having received the estimated amount from the repair shop 4 in this way calculates a predetermined amount from an amount of difference between an amount in the case in which repairing is performed with new parts and the case in which repairing is performed with recycled parts as a refund with the calculation unit 11 (S5).

The insurance company 1 presents this refund to the insured and urges the insured to make a choice on whether repairing is performed with new parts or with recycled parts (36). Note that it is also possible to choose to perform repairing using recycled parts as much as possible in advance at the time of entering into an insurance contract and omit this step.

Then, when the owner 2 chooses to perform repairing using recycled parts, the insurance company 1 informs the repair shop 4 to that effect, and the order unit 44 orders the recycled parts from the used car distribution system 51 or the parts sales shop 52.

In addition, in the case in which the insured chooses to perform repairing using new parts , the insurance company 1 informs the repair shop 4 to that effect, and the order unit 44 orders the new parts from a manufacturer 6.

The repair shop 4 performs repairing using these parts (S9) , and after completing the repairing, charges the insurance company for repairing.

In response to this, the insurance company 1 pays repair charges (insurance money) to the repair shop 4 with the payment unit 12, and in the case in which an amount of difference is generated by using recycled parts, pays a refund to the owner 2 of the vehicle (S10). The payment unit 12 may make a payment with any unit such as arranging bank transfer to the repair shop 4 and the owner 2 of the vehicle or printing of a check, a payment statement, an address , and the like to arrange mailing.

Note that, as to the refund, a predetermined ratio of an amount of difference (compressed amount) between repair charges in the case in which recycled parts are used (use amount of recycled parts) and repair charges in the case in which new parts are used (new parts use amount) is calculated as a refund amount, and this ratio may be set arbitrarily. In particular, it is preferable that the refund is calculated with different ratios according to an amount of the difference.

For example, compression ratio = amount of difference (compressed amount) / use amount of new parts x 100 is found.
(1) In the case in which the compression ratio is 50% or more, 30% of the compressed amount is assumed to be a refund amount.
(2) In the case in which the compression ratio is 5% or more and 50% or less, 20% of the compressed amount is assumed to be a refund amount.
(3) In the case in which the compression ratio is 5% or less, a refund is assumed to be nil.

Table 1 shows an example of the numerical values.

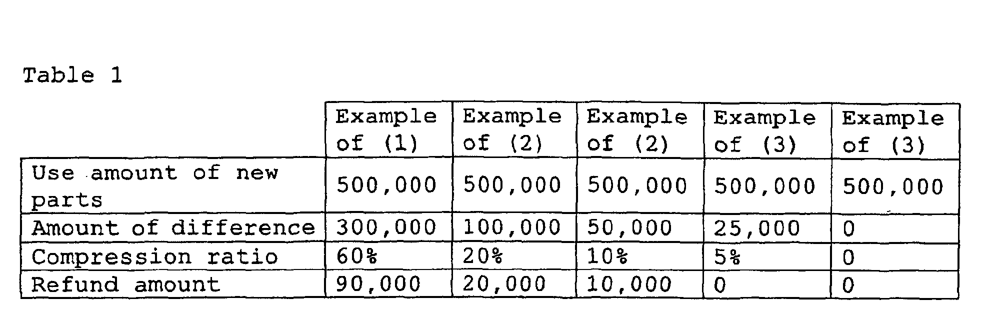

In this case, an amount of payment reduction of the insurance company 1 is as shown in Table 2.

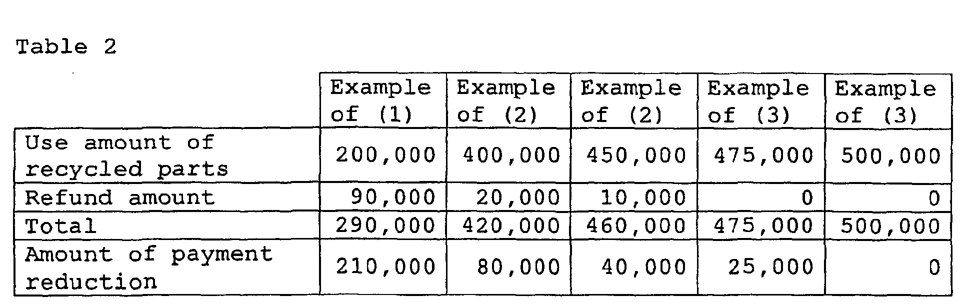

Note that, in the case of vehicle insurance, since a person responsible for an accident is often an owner of an insured object and it may be inappropriate to pay a large amount of refund, an upper limit may be set for a refund amount in this case.

For example, the refund amount is set to be up to 50,000 yen uniformly, or is set not to exceed an annual charge of an insurance contract.

In this case, an amount exceeding the upper limit may be allotted to other expenses such as a tow car charge, courtesy car expenses, or an amount of exemption.

For example, in the case in which the use amount of new parts is 600,000 yen and the compressed amount is 300,000 yen in a contract for which the amount of exemption is 100,000 yen and the upper limit of a refund does not exceed the annual charge of an insurance contract of 30,000 yen, since the compression ratio is 60% = 300,000 yen / {600,000 yen - 100,000 yen (exemption)} x 100, the refund amount of 90,000 yen is calculated.

30,000 yen of this 90,000 yen is paid to an insured as a refund, and the remaining 60,000 yen is allotted to the amount of exemption, the insured only has to pay the amount of exemption of 40,000 yen to the insurance company.

As described above, according to this embodiment, since a refund is calculated based upon an amount of difference actually generated by using recycled parts, a sufficient amount can be returned to the owner surely while controlling payment of the insurance company. Therefore, increase of policyholders can be realized.

In addition, since an advantage of using recycled parts is increased, owners desire to use recycled parts more eagerly, and use of the recycled parts can be facilitated. In particular, choice according to expectation of a repair shop is eliminated.

Note that, in the present invention, repairing is assumed to include the case in which a vehicle is substituted by another product due to total loss or the like.

### Second embodiment

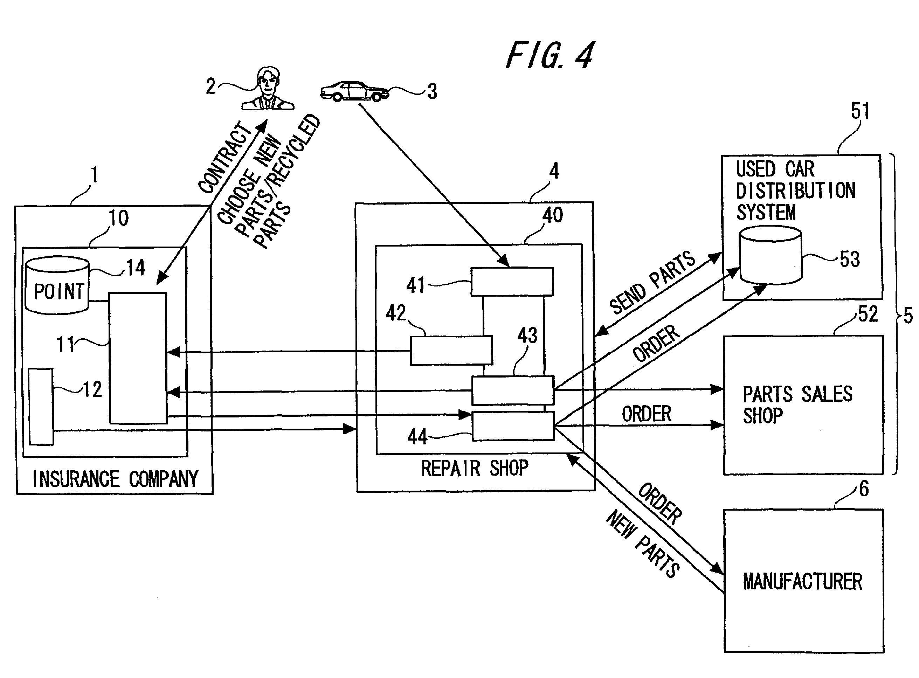

Fig. 4 is a block diagram showing an overall structure of a nonlife insurance system of a second embodiment in accordance with the present invention.

This embodiment is different from the first embodiment described above in that an amount of difference generated by using recycled parts is returned as a service point rather than a refund. In this embodiment, components identical with those in the first embodiment are denoted by the same reference symbols and repeated descriptions of the components are omitted.

In this embodiment, calculation unit 11' issues a point according to an amount of difference between an amount in the case in which repairing is performed with new parts and an amount in the case in which repairing is performed with recycled parts.

For example, an amount of difference is converted at a ratio of 10 yen = 1 point, and 30% of the converted amount is issued as a point.

That is, in the case in which the amount of difference is 200,000 yen, since 200,000 x 0.1 x 0.3 = 6000, 6000 points are issued.

This issued service point is stored in point storage unit 14 in association with a name of an owner. This service point may be printed on a piece of paper and issued like a coupon other than being stored as data.

Then, an insurance company provides services such as exemption of tow car expenses or courtesy car expenses, allotment of points to an amount of exemption, and controlling decrease in a grade due to an accident according to this number of points.

Consequently, control of payment of the insurance company, increase of poly holders, and facilitation of use of recycled parts can be realized.

In addition, if an insurance premium is returned as such a service point, since the insurance company always provides its own services unlike the case in which it is returned by cash, more substantial service can be offered and a degree of satisfaction of the insured is improved, which leads to further increase in the number of policyholders.

Note that the second embodiment may be combined with the first embodiment to be constituted so as to return an insurance premium by cash up to an upper limit of a refund amount and issue points for an amount exceeding the upper limit.

### Third embodiment

In the above-mentioned embodiments, among the unit constituting this system, the calculation unit 11 and the payment unit 12 are provided in the insurance company 1, the parts data input unit 41, the new parts use amount input unit 42, the recycled parts use amount input unit 43, and the order unit 44 are provided in the repair shop 4, and the recycle data storage unit 53 are provided in the used car distribution system 51. However, an arrangement of the respective unit is not limited to this, and other arrangements may be adopted as long as information of the respective unit is communicated appropriately through a communication line or the like.

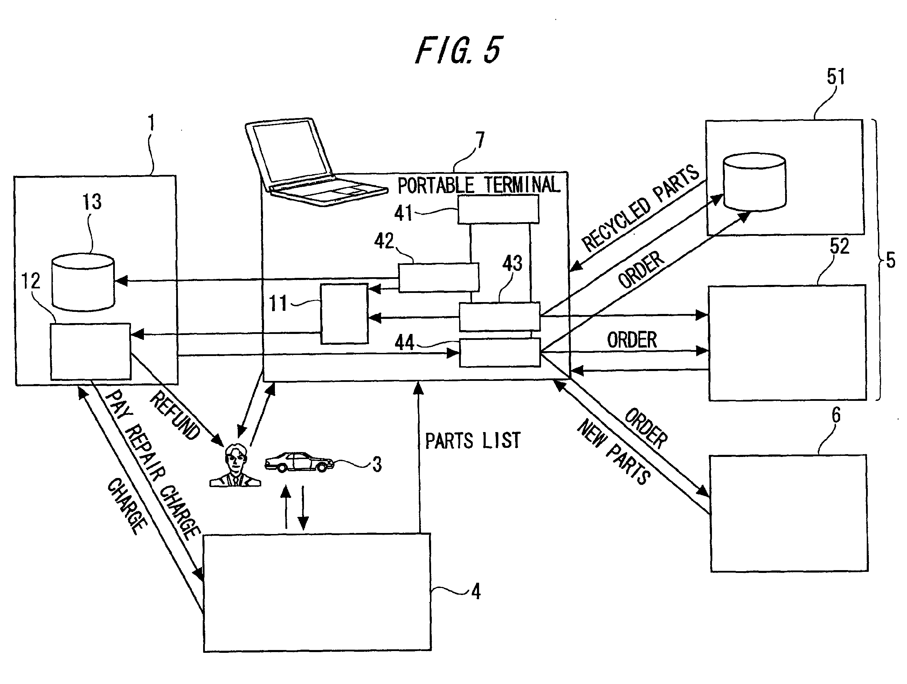

Fig. 5 shows an example in which the calculation unit 11, the parts data input unit 41, the new parts use amount input unit 42, the recycled parts use amount input unit 43, and the order unit 44 are provided in a portable terminal 7.

For example, an employee of the insurance company 1 goes to the repair ship carrying the portable terminal 7, asks which part is required for repairing and inputs the parts from the parts data input unit 41, and the new parts use amount input unit 42 refers to the new parts data storage unit 13 provided in the insurance company 1 via a communication line concerning this part to estimate a use amount of new parts and input in the calculation unit 11. In addition, the recycled parts use amount input unit 43 refers to the recycle data storage unit 53 concerning this part to estimate a use amount of recycled parts and input it in the calculation unit 11. Then, the calculation unit 11 calculates a refund amount from a difference of these amounts.

The employee presents this to the owner 2 and urges the owner 2 to make a choice on whether or not the recycled parts are used. As this point, if the owner 2 desires, the calculation unit 11 may calculate a refund amount again by changing an arrangement such as using new parts for some parts and recycled parts for the other parts.

Then, in accordance with this choice, the employee orders the parts with the order unit 44 and, at the same time, informs the payment unit 12 of the insurance company 1 of the use amount of new parts, the use amount of recycled parts, and the refund amount.

When the repair shop 4 informs the insurance company 1 of completion of repairing, the payment unit 12 pays a repair charge to the repair shop 4 and, at the same time, pays a refund to the owner 2.

Consequently, control of payment of the insurance company 1, increase of policyholders, and facilitation of use of recycled parts can be realized.

Moreover, in this embodiment, since the calculation unit 11, the new parts use amount input unit 42, the recycled parts use amount input unit 43, and the like are arranged in the portable terminal 7, repairing can be requested to the repair shop in which a dedicated terminal (repair shop terminal 40) is not set.

### Other embodiments

[1]: The nonlife insurance system of the present invention is a system for paying an insurance money for damage to an insured object, which includes:
new parts use amount input unit for inputting an amount in the case in which the insured object is repaired using new parts;
recycled parts use amount input unit for inputting an amount in the case in which the insured object is repaired using recycled parts; and
calculation unit for finding an amount of difference between the amount inputted by the new parts use amount input unit and the amount inputted by the recycled parts use amount input unit to calculate a predetermined ratio of the amount of difference as a refund amount.
   Consequently, there is provided the nonlife insurance system which is capable of realizing facilitation of use of recycled parts, increase of policyholders, or reduction of a payment amount of an insurance money.
[2] : The nonlife insurance system as described in [1], in which the refund calculation unit calculates the refund amount with different ratios according to an amount of the difference.
   Consequently, distribution of an amount of difference in the case in which recycled parts are used is set more in detail.
[3] : The nonlife insurance system as described in [1] or [2], in which the refund calculation unit sets an upper limit for a refund amount to be calculated.
   Consequently, for example, an injustice in the case in which a person responsible for damage is identical with a receiver of a refund or the like (owner of an insured object) is controlled.
[4]: The nonlife insurance system as described in [1], [2], or [3], which further includes payment unit for paying the refund amount calculated by the refund calculation unit to the owner of the insured object.
   Consequently, simplification of payment procedures is realized.
[5] : A nonlife insurance system for paying an insurance money for damage to an insured object, which includes:
   new parts use amount input unit for inputting an amount in the case in which the insured object is repaired using new parts;
   recycled parts use amount input unit for inputting an amount in the case in which the insured object is repaired using recycled parts; and
   calculation unit for finding an amount of difference between the amount inputted by the new parts use amount input unit and the amount inputted by the recycled parts use amount input unit to calculate a service point according to the amount of difference.

   Consequently, services offered to an owner of a damaged vehicle from an insurance company are made replete and a degree of satisfaction of the owner as well as a policyholder is increased to realize of increase of policyholders.
[6] : The nonlife insurance system as described in any one of [1] to [5], in which the insured object is a vehicle.
[7] : The nonlife insurance system as described in any one of [1] to [6], which further includes:
   parts data input unit that inputs data of parts required for repairing the insured object; and
   recycle data storage unit in which at least inventory data of recycled parts and amount data of the recycled parts are stored, and in which
   the recycled parts use amount input unit refers to the recycle data storage unit for the data inputted by the parts data input unit to find an amount in the case in which the insured object is repaired using the recycled parts.

   Consequently, estimation work for a use amount of recycled parts is reduced.
[8]: The nonlife insurance system as described in any one of [1] to [6], which further includes new parts data storage unit in which amount data of new parts is stored, and in which
   the new parts use amount input unit refers to the new parts data storage unit concerning data inputted by the new parts data input unit and finds an amount in the case in which the insured object is repaired using the new parts.
   Consequently, estimation work for a use amount of new parts is reduced.
[9] : The nonlife insurance system as described in any one of [1] to [7], which further includes order unit for ordering recycled parts based upon parts data inputted by the parts data input unit in the case of choosing repairs of the insured object using recycled parts.
   Consequently, order work for recycled parts is reduced.
[10] : A terminal used for a nonlife insurance system for paying an insurance money for damage to an insured object, which includes refund calculation unit for calculating a predetermined ratio of an amount of difference between an amount in the case in which the insured object is repaired using new parts and an amount in the case in which a vehicle of the insured object is repaired using recycled parts as a refund amount.
   Consequently, a nonlife insurance system is constituted which appropriately distributes an amount of difference at the time when recycled parts are used and realizes facilitation of use of recycled parts, increase of policyholders, or reduction of a payment amount of an insurance money.
[11] : A terminal used for a nonlife insurance system for paying an insurance money for damage to an insured object, which is characterized by including calculation unit for calculating a service point according to an amount of difference between an amount in the case in which the insured object is repaired using new parts and an amount in the case in which a vehicle of the insured object is repaired using recycled parts.
[12] : A calculation method of a refund, which is characterized by including, at the time when an insurance money is paid for damage to an insured object:
   a step of inputting a use amount of new parts in the case in which the insured object is repaired using new parts;
   a step of inputting a use amount of recycled parts in the case in which the insured object is repaired using recycled parts; and
   a step of finding an amount of difference between the use amount of new parts and the use amount of recycled parts to calculate a predetermined ratio of the amount of difference as a refund amount.
[13] : A calculation method of a refund, which is characterized by including, at the time when an insurance money is paid for damage to an insured object:
   a step of inputting a use amount of new parts in the case in which the insured object is repaired using new parts;
   a step of inputting a use amount of recycled parts in the case in which the insured object is repaired using recycled parts; and
   a step of calculating a service point according to an amount of difference between the use amount of new parts and the use amount of recycled parts.

### Industrial Applicability

As described above, the nonlife insurance system, the terminal used for the nonlife insurance system, and the refund calculation method of the present invention make it possible to appropriately distribute an amount of difference between the case in which an insured object is repaired using new parts and the case in which the insured object is repaired using recycled parts and realize facilitation of use of recycled parts, increase of policyholders, or reduction of a payment amount of an insurance money. From the above description, it can be said that the present invention is high in availability.

It goes without saying that the nonlife insurance system of the present invention is not limited to the above-mentioned embodiments and various modifications can be made within a range not departing from the spirit of the present invention.

Although the vehicle insurance is described in the above-mentioned embodiment, the present invention is not limited to this but can be applied to other types of insurance widely.

For example, in the case in which a policyholder A of property insurance collides with an automobile of B and the automobile (insured object) of B is repaired with the property insurance of A, if B is recommended to use recycled parts and chooses use of the recycled parts, a refund is paid to the owner B of this insured object. Consequently, payment of an insurance company can be controlled in the property insurance as well, and facilitation of use of recycled parts can be realized.

In addition, the present invention may be applied to theft insurance to provide a used product (recycled product) instead of a stolen insured object and pay a refund according to an amount of difference between the used product and a new product.

Moreover, the insured object of the present invention is not limited to an automobile but may be any object as long as it can be repaired (substituted) with recycled parts (including a whole product) such as a camera, apersonal computer, or an electricproduct.

## Claims

1. A nonlife insurance system for paying an insurance money for damage to an insured object, **characterized by** comprising:
new parts use amount input unit that inputs an amount in the case in which the insured object is repaired using new parts;
recycled parts use amount input unit that inputs an amount in the case in which the insured object is repaired using recycled parts; and
calculation unit that finds an amount of difference between the amount inputted by the new parts use amount input unit and the amount inputted by the recycled parts use amount input unit to calculate a predetermined ratio of the amount of difference as a refund amount.

2. A nonlife insurance system according to claim 1, **characterized in that** the refund calculation unit calculates the refund amount with different ratios according to the amount of difference.

3. A nonlife insurance system according to claim 1, **characterized in that** the refund calculation unit sets an upper limit for a refund amount to be calculated.

4. A nonlife insurance system according to claim 1, **characterized by** further comprising payment unit that pays the refund amount calculated by the refund calculation unit to the owner of the insured object.

5. A nonlife insurance system for paying an insurance money for damage to an insured object, **characterized by** comprising:
new parts use amount input unit that inputs an amount in the case in which the insured object is repaired using new parts;
recycled parts use amount input unit that inputs an amount in the case in which the insured object is repaired using recycled parts; and
calculation unit that finds an amount of difference between the amount inputted by the new parts use amount input unit and the amount inputted by the recycled parts use amount input unit to calculate a service point according to the amount of difference.

6. A nonlife insurance system according to any one of claims 1 to 5, **characterized in that** the insured object is a vehicle.

7. A nonlife insurance system according to any one of claims 1 to 5, **characterized in that** the nonlife insurance system further comprises:
parts data input unit that inputs data of parts required for repairing the insured object; and
recycle data storage unit in which at least inventory data of recycled parts and amount data of the recycled parts are stored, and
that the recycled parts use amount input unit refers to the recycle data storage unit for the data inputted by the parts data input unit to find an amount in the case in which the insured object is repaired using the recycled parts.

8. A nonlife insurance system according to any one of claims 1 to 5, **characterized in that** the nonlife insurance system further comprises new parts data storage unit in which amount data of new parts is stored, and
that the new parts use amount input unit refers to the new parts data storage unit concerning data inputted by the new parts data input unit and finds an amount in the case in which the insured object is repaired using the new parts.

9. A nonlife insurance system according to any one of claims 1 to 5, **characterized by** further comprising order unit that orders recycled parts based upon parts data inputted by the parts data input unit in the case of choosing repairs of the insured object using the recycled parts.

10. A terminal used for a nonlife insurance system for paying an insurance money for damage to an insured object, **characterized by** comprising refund calculation unit that calculates a predetermined ratio of an amount of difference between an amount in the case in which the insured object is repaired using new parts and an amount in the case in which a vehicle of the insured object is repaired using recycled parts as a refund amount.

11. A terminal used for a nonlife insurance system for paying an insurance money for damage to an insured object, **characterized by** comprising calculation unit that calculates a service point according to an amount of difference between an amount in the case in which the insured object is repaired using new parts and an amount in the case in which a vehicle of the insured object is repaired using recycled parts.

12. A calculation method of a refund, **characterized by** comprising, at the time when an insurance money is paid for damage to an insured object:
a step of inputting a use amount of new parts in the case in which the insured object is repaired using new parts;
a step of inputting a use amount of recycled parts in the case in which the insured object is repaired using recycled parts; and
a step of finding an amount of difference between the use amount of new parts and the use amount of recycled parts to calculate a predetermined ratio of the amount of difference as a refund amount.

13. A calculation method of a refund, **characterized by** comprising, at the time when an insurance money is paid for damage to an insured object:
a step of inputting a use amount of new parts in the case in which the insured object is repaired using new parts;
a step of inputting a use amount of recycled parts in the case in which the insured object is repaired using recycled parts; and
a step of calculating a service point according to an amount of difference between the use amount of new parts and the use amount of recycled parts.
